# FASCICULE DE BREVET EUROPEEN

(11) **EP 0 596 767 B1**
(45) Date de publication et mention de la délivrance du brevet: **08.01.1997**
(21) Numéro de dépôt: 93402540.4
(22) Date de dépôt: 14.10.1993
(51) Int. Cl.: F16F 13/00

(54) **Support hydroélastique**
Hydro-elastisches Lager
Hydro-elastic support

(30) Priorité: 04.11.1992 FR 9213229
(43) Date de publication de la demande: 11.05.1994
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR)
(74) Mandataire: Polus, Camille

(56) Documents cités:
- EP-A- 0 490 717
- WO-A-91/15687
- FR-A- 2 599 799
- FR-A- 2 627 564
- US-A- 4 709 779

## Description

La présente invention concerne un support hydroélastique, également appelé cale hydroélastique, destiné à être interposé entre deux ensembles à suspendre l'un par rapport à l'autre.

L'invention concerne notamment un support pour la suspension d'un moteur dans un véhicule automobile.

Le document FR-A-2.364.373 décrit et représente un support hydroélastique du type comprenant deux armatures reliées respectivement aux deux ensembles à suspendre, ces deux armatures étant réunies par une masse en matériau élastomère, le support comportant au moins une chambre de travail et une chambre d'expansion, ces deux chambres étant remplies au moins partiellement de liquide et reliées entre elles par un passage de communication, et du type dans lequel la chambre de travail est délimitée en partie par une cloison mobile en matériau élastique dont la face extérieure comporte un poussoir avec lequel coopère une came d'un dispositif d'entraînement de la cloison mobile pour appliquer à cette dernière des déplacements commandés de manière à créer dans la chambre de travail des forces de pression synchrones avec les harmoniques des vibrations de l'un des deux ensembles à isoler tels que par exemple une machine tournante ou un moteur à combustion interne.

Les déplacements auxquels est soumis le poussoir sont par exemple des déplacements alternatifs de fréquence et de phase égales à celles du défaut d'équilibrage à filtrer.

L'agencement décrit et représenté dans ce document est de conception particulièrement complexe, ce document ne proposant par ailleurs aucune solution industrialisable permettant d'agencer de manière simple un tel type de support hydroélastique entre la caisse d'un véhicule automobile et le groupe motopropulseur tout en assurant l'entraînement en rotation de la came d'excitation de la cloison mobile.

Afin de remédier à ces inconvénients, il a déjà été proposé dans la demande de brevet français FR-A-2.670.261 de réaliser le support hydroélastique sous la forme d'un élément unitaire et de prévoir que l'axe d'entraînement en rotation de la came est monté tournant dans un palier fixé à l'une des deux armatures du support hydroélastique.

FR-A-2.670.261 décrit en effet un support hydroélastique destiné à être interposé entre deux ensembles à suspendre l'un par rapport à l'autre, notamment pour la suspension d'un moteur dans un véhicule automobile, du type comportant, agencées successivement selon la direction générale de sollicitation du support, une armature supérieure reliée à l'un des deux ensembles, une masse en matériau élastomère reliée à l'armature supérieure, une chambre de travail délimitée au moins en partie par la masse en matériau élastomère, une cloison inférieure qui délimite la chambre de travail, une chambre d'expansion délimitée par la cloison inférieure de la chambre de travail et par une membrane inférieure souple, et une armature inférieure reliée à la masse en matériau élastomère et au deuxième ensemble à suspendre, les deux chambres étant remplies au moins partiellement de liquide et reliées entre elles par un passage de communication.

Cette solution, ainsi que d'autres solutions équivalentes de l'état de la technique dans lesquelles la direction de sollicitation de la membrane déformable élastiquement est confondue avec la direction générale de sollicitation du support, nécessite que le mécanisme qui actionne par exemple le poussoir lié à la membrane déformable élastiquement puisse se trouver à l'une ou à l'autre des deux extrémités opposées du support hydroélastique.

De plus, ces agencements ont pour inconvénient de nécessiter une cloison mobile qui doit être suffisamment rigide pour lui conférer une fonction de ressort de rappel pour maintenir le galet en contact avec la came.

Afin de remédier à ces inconvénients, l'invention a pour objet un support hydroélastique du type précité, caractérisé en ce qu'il comporte une chambre auxiliaire étanche, agencée latéralement à côté de la chambre d'expansion, qui communique avec la chambre de travail et qui est délimitée en partie par une cloison mobile en matériau élastique dont la face extérieure comporte un poussoir avec lequel coopère un dispositif d'entraînement de la cloison mobile pour appliquer à cette dernière des déplacements commandés de manière à créer dans la chambre auxiliaire des forces de pression synchrones avec les harmoniques de vibrations de l'un desdits deux ensembles.

Selon un mode de réalisation de l'invention :
- le dispositif d'entraînement de la cloison mobile coopère avec le poussoir pour le solliciter selon une direction sensiblement perpendiculaire à la direction générale de sollicitation du support ;
- la masse en matériau élastomère présente une symétrie de révolution autour d'un axe correspondant sensiblement à la direction générale de sollicitation du support ;
- l'armature inférieure présente une symétrie de révolution autour dudit axe et comporte une portion inférieure cylindrique dans laquelle sont agencées la chambre auxiliaire et la chambre d'expansion ;
- le support comporte un manchon dont la paroi latérale cylindrique est montée dans la portion inférieure cylindrique de l'armature inférieure, dont la face supérieure ouverte est obturée par ladite cloison inférieure de la chambre de travail, le manchon comportant une cloison interne qui coopère avec une portion de la paroi latérale du manchon pour délimiter latéralement la chambre auxiliaire ;
- ladite portion de la paroi latérale du manchon comporte une ouverture fermée de manière étanche par ladite cloison mobile en matériau élastique qui délimite en partie la chambre auxiliaire ;
- la portion inférieure cylindrique de l'armature comporte un trou, agencé en regard de ladite ouverture, pour le passage du poussoir ;
- la chambre auxiliaire est délimitée axialement à sa face supérieure par une portion de la cloison inférieure de la chambre de travail, et à sa face inférieure par un fond réalisé venu de matière avec le manchon ;
- la face inférieure ouverte du manchon est fermée de manière étanche par ladite membrane inférieure souple qui délimite en partie la chambre d'expansion en coopération avec la paroi latérale du manchon et avec la cloison inférieure de la chambre de travail ;
- la cloison inférieure de la chambre de travail est réalisée sous la forme d'un disque monté dans un logement complémentaire formé dans le manchon au voisinage du bord supérieur libre de ce dernier ;
- le disque comporte un orifice calibré de communication qui débouche d'une part dans la face supérieure du disque et, d'autre part, dans la face inférieure du disque à l'intérieur de la chambre auxiliaire ;
- le disque comporte un passage agencé dans l'épaisseur du disque et qui débouche d'une part dans la face supérieure du disque et, d'autre part, dans la face inférieure du disque à l'intérieur de la chambre d'expansion ;
- le disque comporte des moyens d'indexation par coopération de formes qui déterminent sa position angulaire par rapport au manchon.

Des avantages de l'invention apparaîtront à la lecture de la description détaillée qui va suivre pour la compréhension de laquelle on se reportera aux dessins annexés dans lesquels :
- La figure 1 est une vue en coupe axiale selon la ligne 1-1 de la figure 2 d'un exemple de réalisation d'un support hydroélastique réalisé conformément aux enseignements de l'invention ;
- la figure 2 est une vue en section selon la ligne 2-2 de la figure 1 ;
- la figure 3 est une vue de dessus du disque constituant la cloison inférieure séparant la chambre de travail de la chambre d'expansion ;
- la figure 4 est une vue en section selon la ligne 4-4 de la figure 3 ;
- la figure 5 est une vue de dessus du manchon agencé à la partie inférieure du support hydroélastique;
- la figure 6 est une vue en perspective éclatée des principaux composants constituant la partie inférieure du support hydroélastique avant leur assemblage dans l'armature inférieure ; et
- la figure 7 est un schéma équivalent permettant d'illustrer le mode de fonctionnement du support.

Le support hydroélastique 10 illustré aux figures est constitué d'une première armature cylindrique 12 et d'une seconde armature 14 qui sont reliées entre elles par une masse en matériau élastomère 16.

L'armature 12 est prévue pour être reliée à une partie (non représentée) du groupe motopropulseur d'un véhicule automobile au moyen de deux pattes transversales 17, tandis que la seconde armature 14 est prévue pour être reliée à une partie de la structure du véhicule automobile par une liaison filetée 18.

La première armature 12 présente une forme générale cylindrique de révolution autour d'un axe X-X qui correspond à la direction générale de sollicitation du support hydroélastique 10.

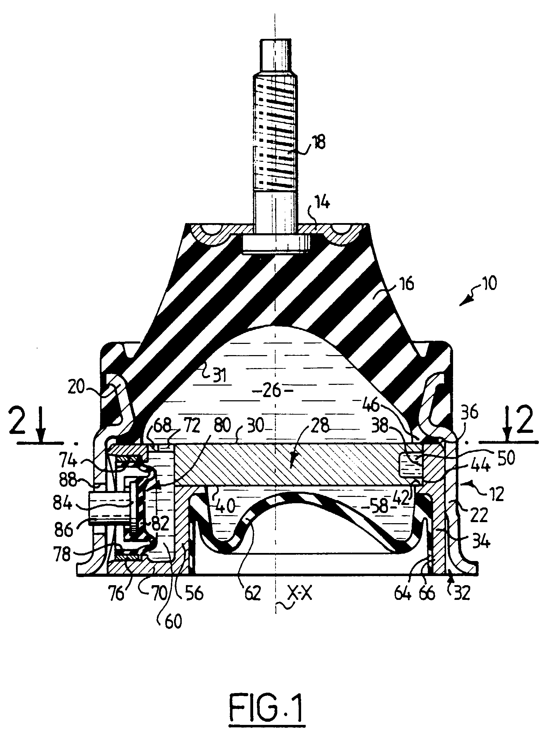

La première extrémité axiale 20, située à sa partie supérieure en considérant la figure 1, de l'armature 12 est noyée dans le matériau élastomère de la masse 16.

La première extrémité axiale 20 se prolonge à la partie inférieure du support hydroélastique 10 par une portion inférieure en forme de jupe cylindrique 22.

La masse en matériau élastomère 16 délimite en partie une chambre de travail 26, à sa partie inférieure en considérant les figures.

La chambre 26 est également délimitée par un disque intermédiaire rigide 28 dont la face supérieure 30 coopère avec la paroi interne concave 31 de l'évidement de la masse en matériau élastomère 16 pour délimiter la chambre de travail 26.

Le support hydroélastique 10 comporte également un manchon, ou douille, de forme générale cylindrique 32.

La paroi latérale en forme de jupe sensiblement cylindrique 34 du manchon 32 est montée serrée à force à l'intérieur de la paroi latérale cylindrique 22 de l'armature inférieure 12.

Au voisinage de son bord supérieur 36, la paroi latérale 34 du manchon 32 comporte un logement 38 dans lequel est reçu le disque rigide 28.

La face inférieure 40 du disque 28 prend appui contre l'épaulement radial interne 42 qui délimite verticalement vers le bas le logement 38.

Le logement 38 s'étend verticalement sensiblement sur toute l'épaisseur du disque 28 et l'étanchéité entre la paroi cylindrique latérale 44 de ce dernier et le logement 38 est assurée à la face supérieure par une lèvre 46 de la masse en matériau élastomère qui est pincée entre le bord supérieur recourbé 20 de l'armature 12 et la face supérieure de l'ensemble constitué par le manchon 32 et le disque 28.

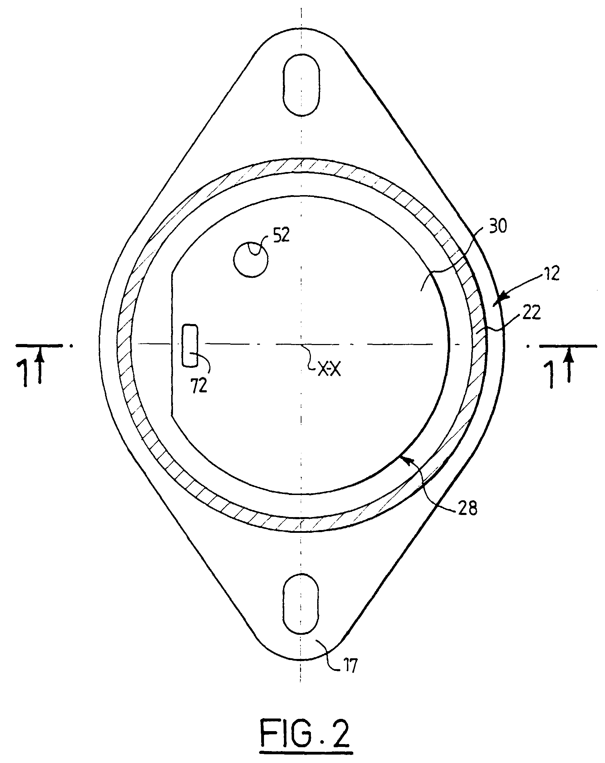

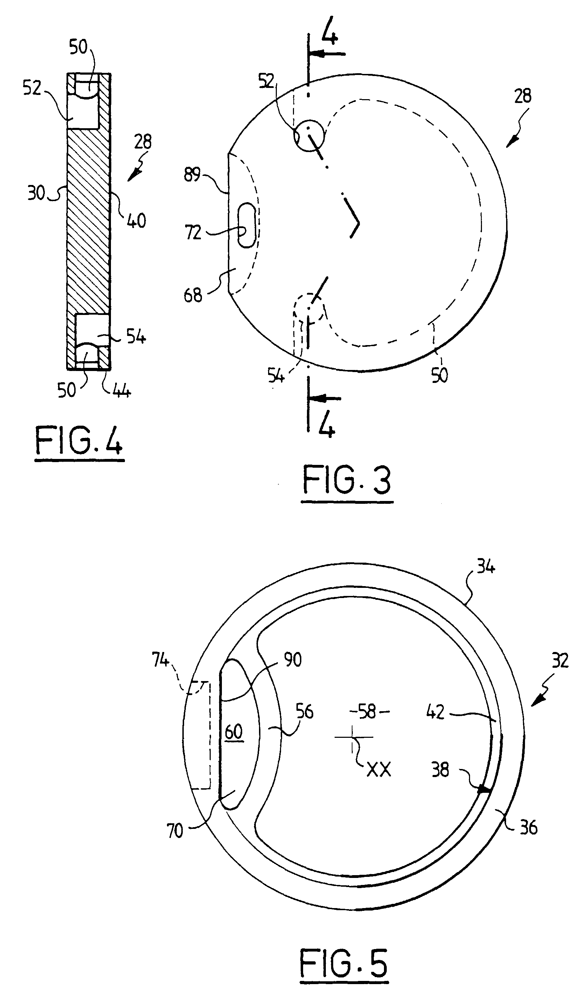

Comme on peut le constater aux figures 1 à 4, le disque 28 comporte une gorge radiale périphérique 50 formée dans sa paroi cylindrique latérale 44, environ sur les trois quarts de la longueur de cette dernière, et qui débouche d'une part dans la face supérieure 30 par une extrémité 52 et, d'autre part, dans la face inférieure 40 par une extrémité 54.

En position assemblée du disque 28 dans le manchon 32, la gorge 50 constitue donc ainsi une colonne qui relie la chambre de travail 26 à la face inférieure 40 du disque.

Le manchon 32 comporte une cloison interne 56 qui délimite latéralement une chambre d'expansion 58 et une chambre auxiliaire 60.

La chambre d'expansion 58, qui est reliée à la chambre de travail 26 par la colonne de liquide constituée par le passage 50, est délimitée axialement vers le bas par une membrane souple 62 qui se prolonge par un voile cylindrique périphérique 64 qui est adhérisé sur la surface interne 66 de la paroi 34 du manchon 32 et de sa cloison 56.

L'ensemble constitué par la chambre de travail 26, le disque 28 et la chambre d'expansion 58 constitue un support hydroélastique du type à colonne selon une technique et un fonctionnement connus.

La chambre auxilaire 60 est agencée latéralement, à l'intérieur de l'armature inférieure 12 à côté de la chambre d'expansion 58.

La chambre auxiliaire 60 est délimitée latéralement par la cloison interne 56 du manchon 34 et par la portion en vis-à-vis de la paroi latérale cylindrique 34 du manchon 32.

La chambre auxiliaire 60 est fermée à sa partie supérieure par une portion amincie 68 du disque 28 et à sa partie inférieure par un fond 70 réalisé venu de matière avec la cloison interne 56 et la cloison latérale 34 par moulage en une seule pièce du manchon 32.

La portion amincie 68 du disque 28 comporte un orifice calibré 72 qui met la chambre auxiliaire 60 en communication avec la chambre de travail 26.

La portion de la paroi cylindrique latérale 34 qui délimite latéralement la chambre auxiliaire 60 comporte également une ouverture cylindrique étagée débouchante 74 dans laquelle est sertie de manière étanche une douille 76 de renfort de la jupe cylindrique 78 d'une cloison mobile et déformable élastiquement 80 qui délimite latéralement vers l'extérieur la chambre auxiliaire 60.

Le voile transversal 82 constituant la partie principale de la cloison mobile 80 reçoit, noyée dans le matériau élastomère, la tête 84 d'un poussoir 86 qui s'étend, selon un rayon, radialement vers l'extérieur du support 10 à travers un trou correspondant 88 formé dans la portion inférieure cylindrique 22 de l'armature inférieure 12.

Le poussoir 86 est prévu pour être relié à tout dispositif (non représenté) susceptible de l'entraîner alternativement en translation selon une direction radiale de manière à appliquer à la cloison mobile 80 des déplacements commandés de manière à créer dans la chambre auxiliaire 60 des forces de pression synchrones avec les harmoniques des vibrations de l'un des deux ensembles à isoler.

Afin d'indexer angulairement le disque 28, dans sa position de montage illustrée à la figure 1, par rapport au manchon 32, le disque 28 comporte un méplat 89 qui est prévu pour coopérer avec un méplat correspondant 90 formé dans le logement 38 du manchon 32.

Cette indexation en position permet de garantir que l'orifice calibré 72 est situé en regard de la chambre auxiliaire 60 et que l'orifice 54 débouche dans la chambre auxiliaire 58.

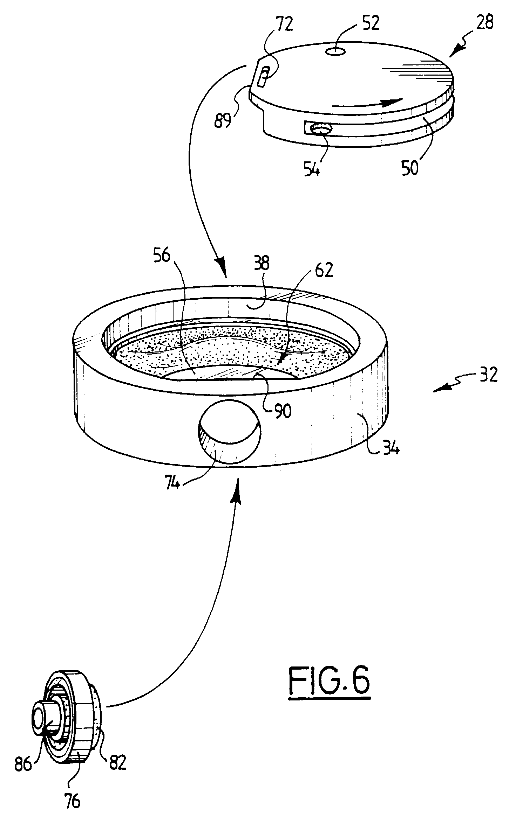

Comme cela est illustré de manière schématique à la figure 6, les trois composants principaux de la partie inférieure du support hydroélastique 10 peuvent être assemblés indépendamment sous la forme d'un sous-ensemble qui est ensuite serti à l'intérieur de la paroi 22 de l'armature inférieure 12, cette opération pouvant être effectuée à l'intérieur d'un bain de remplissage en liquide des chambres 26, 58 et 60.

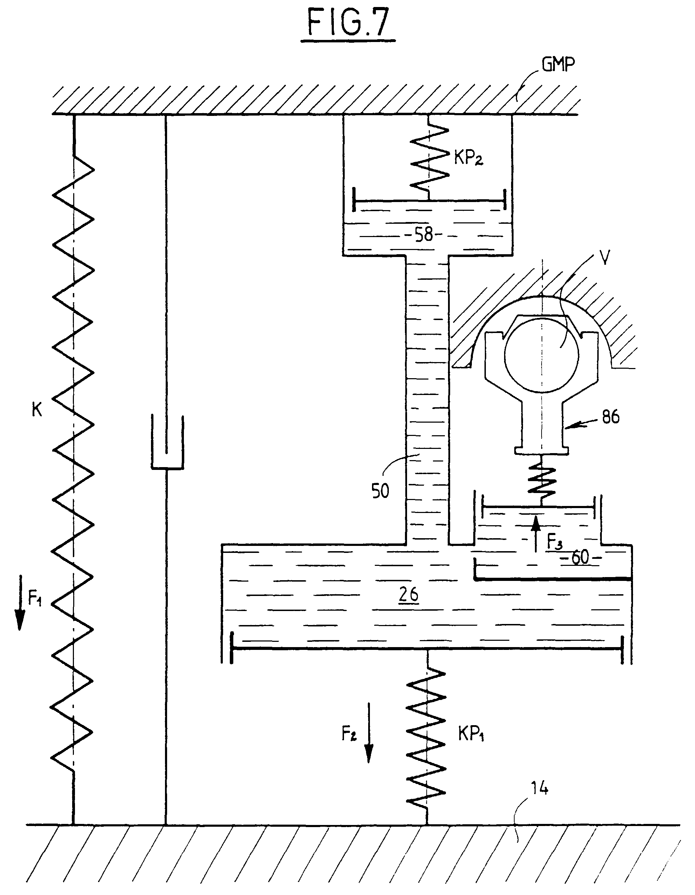

On décrira maintenant le mode de fonctionnement du support hydroélastique représenté aux figures 1 à 6 en se reportant à la figure 7.

Les vibrations du groupe motopropulseur GMP sont transmises à la caisse du véhicule par l'intermédiaire de l'armature 12, de la masse en matériau élastomère 16 et de l'armature 14.

L'effort appliqué au support peut être décomposé en deux efforts distincts.

Premièrement, l'effort F1 également appelé effort direct, dont la valeur dépend de la raideur K de la masse en matériau élastomère 16.

Deuxièmement, l'effort F2 qui résulte de l'action du liquide contenu dans la chambre de travail 26 et dont la valeur dépend de la raideur de tenue à la pression KP1.

Un maneton excentré qui est entraîné en rotation de façon synchrone par rapport à la rotation du groupe motopropulseur, et notamment par rapport à la rotation du vilebrequin V de ce dernier, transmet au poussoir 86 un effort F3 parfaitement synchrone et dont la valeur est telle que F3 = F1 + F2.

L'action du dispositif qui commande le poussoir a donc pour effet d'annuler tout effort transmis à la structure du véhicule.

La masse en matériau élastomère 16 se comporte comme une pompe et elle est montée comprimée lors de la mise en place du support hydroélastique.

Le dispositif qui vient d'être décrit est conçu pour amortir ou atténuer les vibrations de la caisse du véhicule, ainsi que pour empêcher la transmission des vibrations provenant du moteur afin de procurer un meilleur confort du véhicule.

L'utilisation connue de la colonne 50 qui relie entre elles les chambres de travail 26 et d'expansion 58 procure un amortissement à la fréquence de hachis.

L'action d'un mécanisme, par exemple à bielle et manivelle, par l'intermédiaire du poussoir 86 permet d'appliquer au support hydroélastique des forces de pression depuis l'extérieur.

Ces forces de pression sont synchrones avec les harmoniques d'ordre 2 des vibrations d'excitation provenant du groupe motopropulseur. Des forces de pression sont ainsi injectées dans la chambre auxiliaire 60, puis dans la chambre de travail 26 d'un support hydroélastique du type à amortissement à colonne par ondes successives.

Comme on l'a mentionné précédemment en référence au schéma de la figure 7, la raideur résultante du support est nulle.

## Revendications

1. Support hydroélastique destiné à être interposé entre deux ensembles à suspendre l'un par rapport à l'autre, notamment pour la suspension d'un moteur dans un véhicule automobile, du type comportant, agencées successivement selon la direction générale de sollicitation du support, une armature supérieure (14) reliée à l'un des deux ensembles, une masse en matériau élastomère (16) reliée à l'armature supérieure (14), une chambre de travail (26) délimitée au moins en partie par la masse en matériau élastomère (16), une cloison inférieure (28) qui délimite la chambre de travail, une chambre d'expansion (58) délimitée par la cloison inférieure (28) de la chambre de travail (26) et par une membrane inférieure souple (62), et une armature inférieure (12,22) reliée à la masse en matériau élastomère et au deuxième ensemble à suspendre, les deux chambres étant remplies au moins partiellement de liquide et reliées entre elles par un passage (50) de communication, caractérisé en ce qu'il comporte une chambre auxiliaire étanche (60), agencée latéralement à côté de la chambre d'expansion (58), qui communique avec la chambre de travail (26) et qui est délimitée en partie par une cloison mobile en matériau élastique (82) dont la face extérieure comporte un poussoir (86) avec lequel coopère un dispositif d'entraînement de la cloison mobile pour appliquer à cette dernière des déplacements commandés de manière à créer dans la chambre auxiliaire (60) des forces de pression synchrones avec les harmoniques de vibrations de l'un desdits deux ensembles.

2. Support hydroélastique selon la revendication 1, caractérisé en ce que le dispositif d'entraînement de la cloison mobile coopère avec le poussoir (86) pour le solliciter selon une direction sensiblement perpendiculaire à la direction générale (X-X) de sollicitation du support.

3. Support hydroélastique selon la revendication 2, caractérisé en ce que la masse en matériau élastomère (16) présente une symétrie de révolution autour d'un axe (X-X) correspondant sensiblement à la direction générale de sollicitation du support.

4. Support hydroélastique selon la revendication 3, caractérisé en ce que l'armature inférieure (12, 22) présente une symétrie de révolution autour dudit axe et comporte une portion inférieure cylindrique (22) dans laquelle sont agencées la chambre auxiliaire (60) et la chambre d'expansion (58).

5. Support hydroélastique selon la revendication 4, caractérisé en ce qu'il comporte un manchon (32) dont la paroi latérale cylindrique (34) est montée dans la portion inférieure cylindrique (22) de l'armature inférieure, dont la face supérieure ouverte est obturée par la cloison inférieure (28) de la chambre de travail (26), le manchon (32) comportant une cloison interne (56) qui coopère avec une portion de la paroi latérale (34) du manchon pour délimiter latéralement la chambre auxiliaire (60).

6. Support hydroélastique selon la revendication 5, caractérisé en ce que ladite portion de la paroi latérale (34) du manchon comporte une ouverture (74) fermée de manière étanche par ladite cloison mobile (82) en matériau élastique qui délimite en partie la chambre auxiliaire (60).

7. Support hydroélastique selon la revendication 6, caractérisé en ce que la portion inférieure cylindrique de l'armature comporte un trou (88), agencé en regard de ladite ouverture (74), pour le passage du poussoir (86).

8. Support hydroélastique selon l'une quelconque des revendications 5 à 7, caractérisé en ce que la chambre auxiliaire (60) est délimitée axialement à sa face supérieure par une portion (68) de la cloison inférieure (28) de la chambre de travail, et à sa face inférieure par un fond (70) réalisé venu de matière avec le manchon (32).

9. Support hydroélastique selon l'une quelconque des revendications 5 à 8, caractérisé en ce que la face inférieure ouverte du manchon est fermée de manière étanche par ladite membrane inférieure souple (62) qui délimite en partie la chambre d'expansion (58) en coopération avec la paroi latérale du manchon et avec la cloison inférieure (28) de la chambre de travail (26).

10. Support hydroélastique selon l'une quelconque des revendications 5 à 9, caractérisé en ce que la cloison inférieure (28) de la chambre de travail est réalisée sous la forme d'un disque (28) monté dans un logement (38) complémentaire formé dans le manchon (32) au voisinage du bord supérieur libre de ce dernier.

11. Support hydroélastique selon la revendication 10, caractérisé en ce que le disque comporte un orifice (72) calibré de communication qui débouche d'une part dans la face supérieure (30) du disque (28) et, d'autre part, dans la face inférieure (40) du disque à l'intérieur de la chambre auxiliaire (60).

12. Support hydroélastique selon l'une des revendications 10 ou 11, prise en combinaison avec la revendication 9, caractérisé en ce que le disque (28) comporte un passage (50) agencé dans l'épaisseur du disque (28) et qui débouche d'une part dans la face supérieure (30) du disque (30) et, d'autre part, dans la face inférieure (40) du disque (28) à l'intérieur de la chambre d'expansion (58).

13. Support hydroélastique selon l'une quelconque des revendications 10 à 12, caractérisé en ce que le disque (28) comporte des moyens d'indexation par coopération de formes qui déterminent sa position angulaire par rapport au manchon (32).

## Patentansprüche

1. Hydro-elastisches Lager, dazu bestimmt, zwischen zwei Hängevorrichtungen geschaltet zu werden, insbesondere zur Aufhängung eines Kraftfahrzeugmotors, des Typs mit, aufeinanderfolgend entlang der allgemeinen Richtung der Belastung des Lagers angeordnet, einer oberen Armatur (14), verbunden mit einer der beiden Vorrichtungen, einer Masse aus elastomerem Material (16), verbunden mit der oberen Armatur (14), einer Arbeitskammer (26), die wenigstens teilweise durch die Masse des elastomeren Materials (16) begrenzt ist, einer unteren Zwischenwand (28), welche die Arbeitskammer begrenzt, einer Expansionskammer (58), welche durch die untere Zwischenwand (28) der Arbeitskammer (26) und durch eine untere biegsame Membran (62) begrenzt ist, und einer unteren Armatur (12, 22), verbunden mit der Masse aus elastomerem Material und der zweiten Hängevorrichtung, wobei die beiden Kammern wenigstens teilweise mit Flüssigkeit gefüllt sind und untereinander durch einen Verbindungsgang (50) verbunden sind, dadurch gekennzeichnet, daß es eine dichte Hilfskammer (60) umfaßt, welche seitlich neben der Expansionskammer (58) angeordnet ist, welche mit der Arbeitskammer (26) verbunden ist und wenigstens teilweise durch eine bewegliche Zwischenwand aus elastischem Material (82) begrenzt ist, dessen Außenseite eine Druckvorrichtung (86) umfaßt, mit welcher eine Antriebsvorrichtung der beweglichen Zwischenwand zusammenwirkt, um auf diese letztere Verlagerungen aufzubringen, derart gesteuert, daß in der Hilfskammer (60) Drücke erzeugt werden, die synchron mit den Oberschwingungen von einer der genannten beiden Vorrichtungen sind.

2. Hydro-elastisches Lager nach Aspruch 1, dadurch gekennzeichnet, daß die Antriebsvorrichtung der beweglichen Zwischenwand mit der Druckvorrichtung (86) zusammenwirkt, um sie entlang einer Richtung im wesentlichen senkrecht zur Hauptrichtung (X-X) der Belastung des Lagers zu belasten.

3. Hydro-elastisches Lager nach Anspruch 2, dadurch gekennzeichnet, daß die Masse aus elastomerem Material (16) eine Rotationssymmetrie um eine Achse (X-X) im wesentlichen übereinstimmend mit der Hauptrichtung der Belastung des Lagers aufweist.

4. Hydro-elastisches Lager nach Anspruch 3, dadurch gekennzeichnet, daß die untere Armatur (12, 22) eine Rotationssymmetrie um die genannte Achse aufweist und einen unteren zylindrischen Teil (22) umfaßt, in welchem die Hilfskammer (60) und die Expansionskammer (58) angeordnet sind.

5. Hydro-elastisches Lager nach Aspruch 4, dadurch gekennzeichnet, daß es eine Muffe (32) umfaßt, deren zylindrische Seitenwand (34) an dem unteren zylindrischen Teil (22) der unteren Armatur montiert ist, deren offene Oberseite durch die untere Zwischenwand (28) der Arbeitskammer (26) verschlossen ist, wobei die Muffe (32) eine interne Zwischenwand (56) umfaßt, welche mit einem Teil der Seitenwand (34) der Muffe zusammenwirkt, um seitlich die Hilfskammer (60) zu begrenzen.

6. Hydro-elastisches Lager nach Anspruch 5, dadurch gekennzeichnet, daß der genannte Teil der Seitenwand (34) der Muffe eine Öffnung (74) umfaßt, die durch die genannte bewegliche Zwischenwand (82) aus elastischem Material, welche einen Teil der Hilfskammer (60) begrenzt, dicht verschlossen ist.

7. Hydro-elastisches Lager nach Anspruch 6, dadurch gekennzeichnet, daß der untere zylindrische Teil der Armatur ein Loch (88) umfaßt, angeordnet gegenüber der genannten Öffnung (74), für den Durchlaß der Druckvorrichtung (86).

8. Hydro-elastisches Lager nach einem der Ansprüche 5 bis 7, dadurch gekennzeichnet, daß die Hilfskammer (60) an ihrer Oberseite durch einen Teil (68) der unteren Zwischenwand (28) der Arbeitskammer axial begrenzt ist und an ihrer Unterseite durch einen Boden (70), dargestellt durch das Material der Muffe (32).

9. Hydro-elastisches Lager nach einem der Ansprüche 5 bis 8, dadurch gekennzeichnet, daß die offene Unterseite der Muffe durch die genannte untere biegsame Membran (62) dicht verschlossen ist, welche einen Teil der Expansionskammer (58) in Zusammenwirken mit der Seitenwand der Muffe und mit der unteren Zwischenwand (28) der Arbeitskammer (26) begrenzt.

10. Hydro-elastisches Lager nach einem der Ansprüche 5 bis 9, dadurch gekennzeichnet, daß die untere Zwischenwand (28) der Arbeitskammer in Form einer Scheibe (28) dargestellt ist, welche in einer komplementären Ausnehmung (38), die in der Muffe (32) gebildet ist, befestigt ist, in der Nähe der freien Oberkante der letzteren.

11. Hydro-elastisches Lager nach Anspruch 10, dadurch gekennzeichnet, daß die Scheibe eine Öffnung (72) umfaßt, zur Verbindung bemessen, die einerseits in die Oberseite (30) der Scheibe (28) einmündet und andererseits in die Unterseite (40) der Scheibe (28) im Inneren der Hilfskammer (60).

12. Hydro-elastisches Lager nach einem der Ansprüche 10 oder 11, in Kombination mit Anspruch 9 genommen, dadurch gekennzeichnet, daß die Scheibe (28) einen Durchgang (50) umfaßt, der in der Dicke der Scheibe (28) angeordnet ist und der einerseits in die Oberseite (30) der Scheibe (28) einmündet und andererseits in die Unterseite (40) der Scheibe (28) im Inneren der Expansionskammer (58).

13. Hydro-elastisches Lager nach einem der Ansprüche 10 bis 12, dadurch gekennzeichnet, daß die Scheibe (28) Indexiermittel zum Zusammenwirken in der Form umfaßt, die ihre Winkelposition in bezug auf die Muffe (32) bestimmen.

## Claims

1. Hydroelastic support intended to be interposed between two assemblies which are to be suspended one relative to the other, notably for suspending an engine in a motor vehicle, of the type comprising, arranged successively in the general direction of stressing of the support, an upper framework (14) connected to one of the two assemblies, a mass of elastomeric material (16) connected to the upper framework (14), a working chamber (26) at least partly delimited by the mass of elastomeric material (16), a lower partition (28) which delimits the working chamber, an expansion chamber (58) bounded by the lower partition (28) of the working chamber (26) and by a flexible lower membrane (62), and a lower framework (12, 22) connected to the mass of elastomeric material and to the second assembly which is to be suspended, the two chambers being at least partly filled with liquid and connected to each other by a communication passage (50), characterised in that it comprises a leaktight auxiliary chamber (60) arranged laterally alongside the expansion chamber (58), which communicates with the working chamber (26) and which is partly bounded by a movable partition of elastic material (82) the outer surface of which has a button (86) with which a drive means for the movable partition co-operates so as to subject said partition to controlled movements in order to create in the auxiliary chamber (60) pressure forces which are synchronised with the vibrational harmonics of one of said two assemblies.

2. Hydroelastic support according to claim 1, characterised in that the drive means for the movable partition cooperates with the button (86) in order to bias it in a direction substantially perpendicular to the general direction (X-X) of stressing of the support.

3. Hydroelastic support according to claim 2, characterised in that the mass of elastomeric material (16) is rotationally symmetrical about an axis (X-X) corresponding substantially to the general direction of stressing of the support.

4. Hydroelastic support according to claim 3, characterised in that the lower framework (12, 22) is rotationally symmetrical about said axis and has a cylindrical lower portion (22) in which are arranged the auxiliary chamber (60) and the expansion chamber (58).

5. Hydroelastic support according to claim 4, characterised in that it comprises a sleeve (32) the cylindrical side wall (34) of which is mounted in the cylindrical lower portion (22) of the lower framework, the open upper surface of which is covered by the lower partition (28) of the working chamber (26), the sleeve (32) comprising an internal partition (56) which co-operates with a part of the side wall (34) of the sleeve in order to define the auxiliary chamber (60) laterally.

6. Hydroelastic support according to claim 5, characterised in that said part of the side wall (34) of the sleeve has an opening (74) which is closed off in leaktight manner by said movable partition (82) of elastic material which partly bounds the auxiliary chamber (60).

7. Hydroelastic support according to claim 6, characterised in that the cylindrical lower portion of the framework has a hole (88) arranged opposite said opening (74) for the button (86) to pass through.

8. Hydroelastic support according to any one of claims 5 to 7, characterised in that the auxiliary chamber (60) is axially bounded at its upper surface by a part (68) of the lower partition (28) of the working chamber and at its lower surface by a base (70) integrally formed with the sleeve (32).

9. Hydroelastic support according to any one of claims 5 to 8, characterised in that the open lower surface of the sleeve is closed off in leaktight manner by said flexible lower membrane (62) which partly bounds the expansion chamber (58) in conjunction with the side wall of the sleeve and with the lower partition (28) of the working chamber (26).

10. Hydroelastic support according to any one of claims 5 to 9, characterised in that the lower partition (28) of the working chamber is made in the form of a disc (28) mounted in a complementary recess (38) formed in the sleeve (32) in the vicinity of the free upper edge of the latter.

11. Hydroelastic support according to claim 10, characterised in that the disc comprises a calibrated communication port (72) which opens, on the one hand, in the upper surface (30) of the disc (28) and, on the other hand, in the lower surface (40) of the disc inside the auxiliary chamber (60).

12. Hydroelastic support according to one of claims 10 or 11, combined with claim 9, characterised in that the disc (28) comprises a passage (50) provided in the thickness of the disc (28) and opening, on the one hand, in the upper surface (30) of the disc (30) and, on the other hand, in the lower surface (40) of the disc (28) inside the expansion chamber (58).

13. Hydroelastic support according to any one of claims 10 to 12, characterised in that the disc (28) has indexing means, operating by the interlocking of shapes, which determine its angular position relative to the sleeve (32).
